# EUROPÄISCHE PATENTSCHRIFT

(11) **EP 4 025 391 B1**
(45) Veröffentlichungstag und Bekanntmachung des Hinweises auf die Patenterteilung: **25.10.2023**
(21) Anmeldenummer: 20780900.5
(22) Anmeldetag: 01.09.2020
(51) Int. Cl.: B25J 9/00, B21D 43/10

(54) **MANIPULATORANORDNUNG UND VERFAHREN ZUM BIEGEN EINES BAUTEILS**
MANIPULATOR ARRANGEMENT AND METHOD FOR BENDING A WORKPIECE
DISPOSITIF DE MANIPULATION ET MÉTHODE POUR PLIER UNE PIÈCE

(30) Priorität: 02.09.2019 AT 507632019
(43) Veröffentlichungstag der Anmeldung: 13.07.2022
(73) Patentinhaber: TRUMPF Maschinen Austria GmbH & Co. KG., 4061 Pasching (AT)
(72) Erfinder: ANGERER, Gerhard, 4203 Altenberg (AT); FREUDENTHALER, Klemens, 4020 Linz (AT); HAUSMANN, Florian, 4050 Traun (AT); HÖRL, Matthias, 4020 Linz (AT); KOVJENIC, Nenad, 4040 Linz (AT); MAIER, Florian, 4060 Leonding (AT); SCHERNHAMMER, Michael, 4060 Leonding (AT); STEININGER, Verena, 4020 Linz (AT); THEIS, Helmut, 4540 Pfarrkirchen (AT)
(74) Vertreter: Burger, Hannes
(86) Internationale Anmeldenummer: PCT/AT2020/060326
(87) Internationale Veröffentlichungsnummer: WO 2021/042147

(56) Entgegenhaltungen:
- EP-A1- 0 250 470
- EP-A1- 3 219 448
- EP-B1- 0 250 470
- EP-B1- 3 219 448
- WO-A1-2014/128493
- CN-A- 107 160 371
- DE-A1-102013 220 798
- US-B2- 9 409 269

## Beschreibung

Die Erfindung betrifft eine Manipulatoranordnung und ein Verfahren zum Biegen eines Bauteils.

In modernen Fertigungsanlagen erfolgt der Werkstück- bzw. B auteiltransport häufig vollautomatisiert. Hierzu hat sich die Verwendung von unterschiedlichen Manipulatoren mit Greifeinrichtungen, wie beispielsweise Robotern etabliert.

Zum Handling von Bauteilen sind dem Fachmann auch Querarme bekannt, um mehrere Roboterarme miteinander zu koppeln.

Die EP 3219448 B1 beschreibt eine Werkstücktransportvorrichtung für eine Pressmaschine mit zwei Robotern. Jeder der Roboter umfasst einen Hebe- und Senkrahmen, der auf einem stationären Rahmen (F) abgestützt ist, sowie einen ersten Arm und einen zweiten Arm mit einem distalen Ende. Mittels jeweils eines eigenen Antriebsmechanismus ist jeder der ersten Arme um eine Vertikalachse drehbar. Weiters ist ein Querarm vorgesehen, mittels dem die beiden distalen Enden der zweiten Arme gekoppelt sind. Der Querarm ist jeweils mittels eines Gelenks an den zweiten Armen frei um seine Längsachse drehbar gelagert. Eine Werkstückhalteeinheit ist lösbar mit dem Querarm verbunden, wobei eine zentrale Drehlagerung der Werkstückhalteeinheit am Querarm vorgesehen ist.

Die EP 2908985 B1 beschreibt ein System zur Handhabung von Werkstücken in einer Pressenstraße mittels zwei Robotern. Jeder der Roboter umfasst Roboterarme, wobei die beiden äußersten Roboterarme jedes Roboters mittels eines Querarms miteinander verbunden sind. Der Querarm ist zusätzlich längenveränderlich ausgebildet, wobei die beiden Querarmteilstücke gegeneinander um deren Längsachse verdrehbar sind. Am Querarm ist zumindest eine Werkstückhalteeinheit drehbar daran gelagert.

Aufgabe der vorliegenden Erfindung war es, die Nachteile des Standes der Technik zu überwinden und eine Vorrichtung und ein Verfahren zur Verfügung zu stellen, mittels derer eine einfache und zuverlässige Kopplung von Manipulatoren ermöglicht wird. Weiterhin war es die Aufgabe der Erfindung die Flexibilität in Hinblick auf Größe und Gewicht von Bauteilen zu erhöhen, welche mittels Manipulatoren transportiert bzw. gehalten werden.

Diese Aufgabe wird durch eine Vorrichtung und ein Verfahren gemäß den Ansprüchen gelöst.

Die Erfindung betrifft eine Manipulatoranordnung zum Transport und/oder Handling von Bauteilen, insbesondere Blechteilen, umfassend einen ersten Manipulator mit einem ersten drehbar gelagerten Kupplungsorgan für ein Greifwerkzeug und einen zweiten Manipulator mit einem zweiten Kupplungsorgan für ein Greifwerkzeug, ein Koppelelement umfassend ein erstes Kupplungselement für den ersten Manipulator, ein zweites Kupplungselement für den zweiten Manipulator und eine erste drehbare Lagervorrichtung für ein Greifwerkzeug. Das erste Kupplungselement umfasst eine zweite drehbare Lagervorrichtung, wobei die zweite Lagervorrichtung mechanisch mit der ersten Lagervorrichtung gekoppelt ist und wobei eine auf das erste Kupplungselement einwirkende Drehbewegung über die zweite Lagervorrichtung an die erste Lagervorrichtung übertragbar ist.

Bei den Manipulatoren kann es sich um Handhabungseinrichtungen für Bauteile jeglicher Art handeln, bevorzugt kommen mehrachsige Industrieroboter zum Einsatz, welche mittels dem Koppelelement miteinander gekoppelt werden.

Mittels dem erfindungsgemäßen Koppelement können ein erster Manipulator und ein zweiter Manipulator schnell und einfach miteinander gekoppelt werden, wobei eine mechanische Verbindung der Manipulatoren herstellbar ist. Bevorzugt kommen zum an- und abkuppeln der Manipulatoren Schnellwechselkupplungen zum Einsatz, sodass der Vorgang des An- und Abkuppelns an dem Koppelelement vollautomatisch durchgeführt werden kann. Eine Kupplungsvorrichtung umfasst dabei jeweils ein Kupplungselement und ein Kupplungsorgan, welche miteinander verbindbar bzw. aneinander kuppelbar ausgeführt sind.

An das Koppelelement kann des Weiteren ein Greifwerkzeug angekuppelt werden, wobei es sich bei dem Greifwerkzeug um einen Vakuumgreifer, Zangengreifer, Magnetgreifer oder Plattengreifer handeln kann. Zum Aufgreifen, Transportieren und Halten von Blechteilen werden dabei bevorzugt Vakuumgreifer verwendet, mittels welcher ein schonendes und sicheres Bauteilhandling ermöglicht wird. Je nach Bedarf bzw. Anforderung können dabei unterschiedliche Greifwerkzeuge an das Koppelelement angekuppelt werden.

Zusätzlich ist es auch denkbar, dass Koppelelement und Greifwerkzeug eine integrierte Einheit bilden, wobei das Koppelelement eine gemeinsame Baugruppe mit dem Greifwerkzeug bildet. Hiermit kann ein schnelleres An- und Abkuppeln der integrierten Einheit von Koppelelement und Greifwerkezug ermöglicht werden.

Vorteilhafterweise können mittels der erfindungsgemäßen Manipulatoranordnung einerseits sehr schwere Bauteile sicher transportiert werden, wobei zum Aufgreifen, Transportieren und Halten des schweren Bauteils mehrere gleichartige Manipulatoren verwendet werden, wobei sich das Gewicht des Bauteils auf die Manipulatoren gleichmäßig aufteilt. Somit kann die Bedien- und/oder Anlagensicherheit erhöht und sicherheitskritische Situationen hintangehalten werden.

Zudem wird durch das erfindungsgemäße Koppelelement eine Vielzahl an Einsatzmöglichkeiten geschaffen und somit das Produktspektrum erweitert bzw. die Flexibilität für den Benutzer erhöht.

Zusätzlich wird das Handling von großen Bauteilen mit der erfindungsgemäßen Manipulatoranordnung erleichtert bzw. ermöglicht, nachdem von den miteinander gekoppelten Manipulatoren mittels des Koppelelements auch großflächige Greifwerkzeuge sicher verwendet bzw. von der Manipulatoranordnung aufgenommen werden können.

Von großem Vorteil ist dabei auch, dass von der Manipulatoranordnung gehaltene Bauteile einfach auf der Manipulatoranordnung um einen vorbestimmten Winkel gedreht werden können, ohne das Bauteil ablegen zu müssen. Nach der Durchführung von Bearbeitungsschritten an dem Bauteil kann dieses somit einfach und schnell in eine neue räumliche Lage verdreht werden, welche für die Durchführung von weiteren Bearbeitungsschritten erforderlich ist. Zusätzliche Einrichtungen wie Drehteller bzw. Drehtische entfallen dabei, was weiterhin zur Reduktion des Platzbedarfes einer technischen Anlage führen kann.

Insgesamt können somit mit der erfindungsgemäßen Manipulatoranordnung die Produktivität erhöht und die Zeitdauer für die Durchführung von Bearbeitungsschritten an dem Bauteil verringert werden.

Vorteilhaft bei der erfindungsgemäßen Manipulatoranordnung ist dabei auch, dass für das Drehen des Bauteils in dem Koppelelement kein zusätzlicher bzw. eigener Antrieb bzw. Aktor in dem Koppelement vorgesehen sein muss. Durch die mechanische Kopplung des ersten Manipulators mit dem drehbar gelagerten Kupplungsorgan für das Greifwerkzeug am Koppelement, können in den Manipulatoren standardmäßig vorgesehene Antriebs-, bzw. Dreheinrichtungen zum Drehen des Bauteils verwendet werden. Das passive Koppelelement dient somit der Übertragung der Drehbewegung von der zweiten Lagervorrichtung an die erste Lagervorrichtung. Hierbei entfallen zusätzliche Bauteile für Antriebe, Lagerungen, usw. im Koppelelement womit eine kostengünstigere und wartungsfreundlichere Bauweise des Koppelements ermöglicht wird.

Des Weiteren kann es zweckmäßig sein, wenn in der ersten Lagervorrichtung ein drittes Kupplungsorgan gelagert ist, mittels welchem ein Greifwerkzeug an das Koppelelement ankoppelbar ist.

Mit dieser Maßnahme kann die Flexibilität des Koppelelements dahingehend erhöht werden, dass mittels dem Koppelelement verschiedene Greifwerkezuge aufgenommen werden können und im Zuge eines Produktionsprozesses gewechselt werden können. Bei einem Produktionsprozess kann es sich dabei um eine Abfolge mehrerer Biegezyklen handeln, wobei vor jedem Biegezyklus ein anderes Greifwerkzeug eigewechselt werden kann. Vorteilhafterweise ist das dritte Kupplungsorgan dabei auch als Schnellwechselkupplung ausgebildet.

Ferner kann vorgesehen sein, dass die erste Lagervorrichtung eine erste drehbare Welle umfasst und dass die zweite Lagervorrichtung eine zweite drehbare Welle umfasst, wobei die erste Welle und die zweite Welle drehbeweglich miteinander gekoppelt sind.

Vorteilhafterweise kann hiermit eine auf die zweite Welle aufgebrachte Drehbewegung an die zweite Welle übertragen werden und die zweite Welle braucht nicht gesondert angetrieben werden. Bei einer Drehung der zweiten Welle wird somit die erste Welle auch in eine Drehung versetzt, wobei auch ein Greifwerkzeug und ein davon aufgenommenes Bauteil gedreht werden.

Bei einer Lagervorrichtung kann es sich in einer Ausführungsform um ein Wälzlager, wie ein Kugellager handeln. Alternativ dazu können auch andere Lagerarten, wie Gleitlager zum Einsatz kommen.

Darüber hinaus kann vorgesehen sein, dass auf der ersten Welle eine erste Zahnriemenscheibe angeordnet ist und dass auf der zweiten Welle eine zweite Zahnriemenscheibe angeordnet ist, wobei die erste Zahnriemenscheibe und die zweite Zahnriemenscheibe über einen Zahnriemen miteinander verbunden sind.

Es bedarf somit keines zusätzlichen Antriebs, wie einem Elektroantrieb für das auf dem Koppelelement angeordnete Greifwerkzeug. Zum Umsetzen der Drehbewegung können standardmäßige mechanische Bauteile wie Zahnriemenscheiben und Zahnriemen zum Einsatz kommen. Anstelle eines Zahnriemens können die erste Zahnriemenscheibe und die zweite Zahnriemenscheibe auch mittels einer Kette miteinander verbunden sein, womit ein Kettengetriebe gebildet werden kann.

Vorteilhaft ist auch eine Ausprägung, gemäß welcher vorgesehen sein kann, dass die erste Zahnriemenscheibe einen ersten Scheibendurchmesser und die zweite Zahnriemenscheibe einen zweiten Scheibendurchmesser aufweist, wobei der erste Scheibendurchmesser unterschiedlich zu dem zweiten Scheibendurchmesser ist.

Durch das Vorsehen von unterschiedlichen Scheibendurchmessern können unterschiedliche Übersetzungen, je nach Anforderung, realisiert werden. Durch die unterschiedliche Dimensionierung der Scheibendurchmesser bzw. dem Vorsehen unterschiedlicher Anzahlen an Zähnen an den Zahnriemenscheiben kann folglich eine Übersetzung ins Langsame oder eine Übersetzung ins Schnelle realisiert werden.

Gemäß einer Weiterbildung ist es möglich, dass auf der ersten Welle ein erstes Zahnrad eines Zahnradgetriebes angeordnet ist und dass auf der zweiten Welle eine zweites Zahnrad des Zahnradgetriebes angeordnet ist, wobei eine auf die zweite Welle einwirkende Drehbewegung über das zweite Zahnrad (36) an das erste Zahnrad und die erste Welle übertragbar ist.

Alternativ zu einem Zahnriemengetriebe oder einem Kettengetriebe kann zum Übertragen der Drehbewegung von der zweiten Welle an die erste Welle ein Zahnradgetriebe vorgesehen sein. Durch eine unterschiedliche Dimensionierung der einzelnen Zahnräder des Zahnradgetriebes, bzw. durch das Vorsehen unterschiedlicher Anzahlen an Zähnen an den Zahnrädern können dabei wieder verschiedene Übersetzungsverhältnisse realisiert werden. Das Zahnradgetriebe kann dabei eine Vielzahl an Zahnrädern umfassen.

Ferner kann es zweckmäßig sein, wenn das erste und/oder zweite Kupplungselement eine Schnittstelle zur Übertragung von zumindest einem fluiden Arbeitsmedium und/oder eines elektrischen Signals umfasst.

Vorteilhafterweise können hierbei ein fluides Arbeitsmedium und ein elektrisches Signal von einem Manipulator über das Koppelelement an ein Greifwerkzeug übertragen werden. Bei dem fluiden Arbeitsmedium kann es sich dabei um Vakuum handeln, mit welchem ein an das Koppelelement gekoppelter Vakuumgreifer versorgt wird. Das Koppelelement kann somit einfach ausgeführt werden, nachdem eine gesonderte Versorgungseinheit für Arbeitsmedien bzw. elektrische Signale an dem Koppelelement entfällt. Das Koppelelement kann somit möglichst kompakt und wenigen mechanischen bzw. elektronischen Bauteilen ausgeführt werden.

Darüber hinaus kann vorgesehen sein, dass die erste Lagervorrichtung einen Drehübertrager und/oder eine Energieführungskette umfasst, welche dazu ausgebildet sind zumindest ein fluides Arbeitsmedium und/oder ein elektrisches Signal an ein Greifwerkzeug zu übertragen, welches an das Koppelelement ankuppelbar ist.

Zur Versorgung des dritten Kupplungsorgans bzw. eines an ein Koppelelement gekoppelten Greifwerkzeugs werden fluide Arbeitsmedien und elektrische Signale vorteilhafterweise über Drehübertrager bzw. Schleifringe übertragen. Dadurch wird eine endlose Drehung bzw. eine unendliche Anzahl von Umdrehungen des Greifwerkzeugs ermöglicht.

Alternativ dazu kann auch eine Energieführungskette vorgesehen sein, mittels welcher eine begrenzte Anzahl von Umdrehungen ermöglicht wird.

Des Weiteren kann vorgesehen sein, dass das zweite Kupplungselement ein formflexibles Lagerelement umfasst.

Ein formflexibles Lagerelement kann dabei in Form eines Vakuumsaugers oder als eine Mehrzahl von gefederten Greifelementen ausgeführt sein. Das zweite Kupplungselement bildet somit eine elastische Koppelstelle zwischen dem zweiten Manipulator und dem Koppelelement. Hiermit können Ungenauigkeiten der Manipulatoren, beispielsweise beim Verfahren entlang einer Verfahrstrecke oder Fertigungstoleranzen ausgeglichen bzw. kompensiert werden.

Gemäß einer besonderen Ausprägung ist es möglich, dass das Koppelelement zumindest ein drittes Kupplungselement für zumindest einen dritten Manipulator umfasst.

In einer Ausführungsform können an dem Koppelelement eine Vielzahl von Kupplungselementen für eine Vielzahl von Manipulatoren vorgesehen sein, wobei die Flexibilität in Hinblick auf Gewicht und Größe eines zu transportierenden Bauteils gesteigert werden kann. Entsprechend einer vorteilhaften Weiterbildung kann vorgesehen sein, dass zumindest der erste Manipulator und/oder der zweite Manipulator einen Drehantrieb umfassen, welcher dazu ausgebildet ist, das erste Kupplungsorgan und/oder zweite Kupplungsorgan in eine Drehbewegung zu versetzen.

Vorteilhafterweise sind dabei in dem Koppelelement bzw. einem mit dem Koppelelement gekoppelten Greifwerkzeug keine weiteren Antriebe notwendig. Manipulatoren wie Industrieroboter umfassen standardmäßig eine Vielzahl von Antrieben, mit welchen ein mit dem erfindungsgemäßen Koppelelement gekoppeltes Greifwerkzeug in eine Drehbewegung versetzt werden kann.

Die Erfindung betrifft weiters Verfahren zum Biegen eines Bauteils, insbesondere eines Blechteils, entsprechend Verfahrensanspruch 12.

Vorteilhafterweise können mehrere Biegezyklen mit dem erfindungsgemäßen Verfahren schnell nacheinander durchgeführt werden, nachdem das Bauteil mittels dem Koppelelement bzw. dem damit gekoppelten Greifwerkzeug gedreht werden kann und nicht zwischen einzelnen Biegezyklen auf einem Drehtisch abgelegt werden und wieder aufgenommen werden muss. Damit kann die Produktivität gesteigert und die Durchlaufzeit gesenkt werden.

Bei dem vorbestimmten Drehwinkel handelt es sich dabei um einen definierten Winkel, um welchen ein Bauteil zwischen einzelnen Biegezyklen gedreht werden muss, um beispielsweise nacheinander Kantungen an einer Längsseite und Kantungen an einer Schmalseite eines Bauteils durchzuführen.

Ferner kann vorgesehen sein, dass an dem Bauteil in der zweiten räumlichen Lage zumindest ein zweiter Biegezyklus mit zumindest einem Biegeschritt durchgeführt wird.

Vorteilhaft dabei ist, dass im Wesentlichen direkt anschließend an den ersten Biegezyklus mit dem zweiten Biegezyklus begonnen werden kann, nachdem das Bauteil dazwischen, zur Veränderung der räumlichen Lage, nicht abgelegt werden muss. Insgesamt kann somit die Dauer eines gesamten Biegeprozesses reduziert werden.

Darüber hinaus kann vorgesehen sein, dass das Bauteil aus der zweiten räumlichen Lage um einen zweiten vorbestimmten Drehwinkel in zumindest eine dritte räumliche Lage verdreht wird.

Nach dem zweiten Biegezyklus kann das Blechteil um einen weiteren vorbestimmten Drehwinkel in zumindest eine dritte räumliche Lage verdreht werden, wobei im Wesentlichen unmittelbar anschließend an den zweiten Biegezyklus mit einem dritten Biegezyklus begonnen werden kann. Die Anzahl an Lageveränderungen und Biegezyklen ist dabei beliebig erweiterbar, je nach herzustellendem Produkt. Vorteilhaft ist dabei wiederrum dass die Durchlaufzeit eines Gesamtprozesses mit einer Vielzahl von Biegezyklen reduziert werden kann.

Zum besseren Verständnis der Erfindung wird diese anhand der nachfolgenden Figuren näher erläutert.

Es zeigen jeweils in stark vereinfachter, schematischer Darstellung:
- Fig. 1: eine Manipulatoranordnung, wobei ein erster Manipulator mittels einem Koppelelement mit einem zweiten Manipulator gekoppelt ist;
- Fig. 2: das Koppelelement in einer Seitenansicht;
- Fig. 3: das Koppelelement in einer Draufsicht;
- Fig. 4: eine Ausführungsform eines Koppelelements in einer Seitenansicht;
- Fig. 5: eine Ausführungsform eines Koppelelements in einer Draufsicht;
- Fig. 6: eine weitere Ausführungsform eines Koppelelements;
- Fig. 7: eine weitere Ausführungsform eines Koppelelements mit einem Greifwerkzeug;
- Fig. 8: eine Fertigungsanlage mit einer Biegemaschine und einer Manipulatoranordnung.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

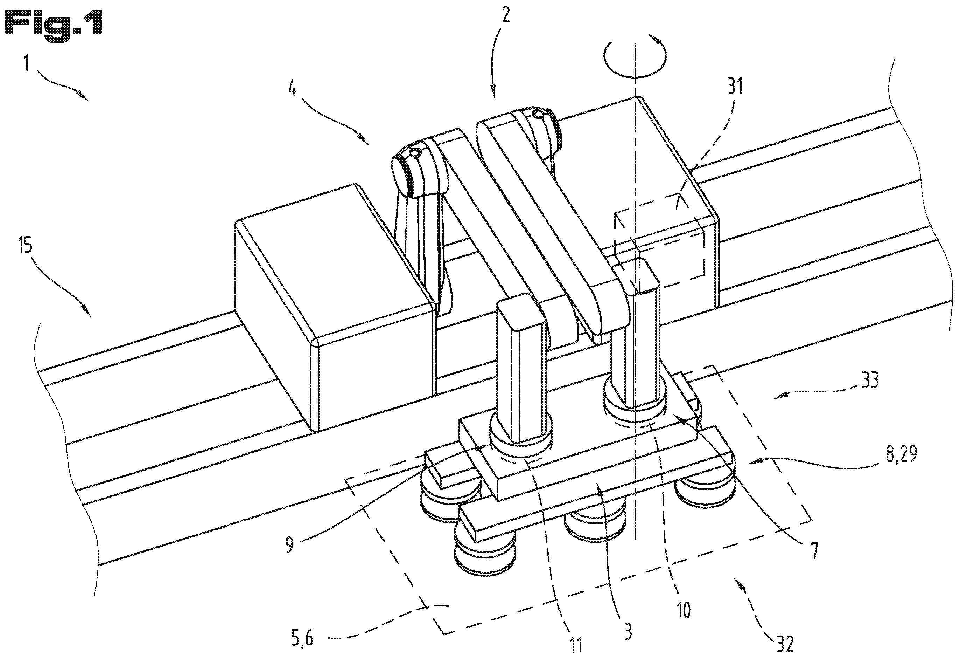

In der Fig. 1 ist eine Manipulatoranordnung 1 dargestellt, wobei ein erster Manipulator 2 mittels einem Koppelelement 3 mit einem zweite Manipulator 4 gekoppelt ist. Die Manipulatoranordnung 1 ist dabei zum Transport und/oder Handling von Bauteilen 5, insbesondere Blechteilen 6, ausgebildet. In der Fig. 1 ist ein von der Manipulatoranordnung 1 gehaltenes Blechteil 6 strichliert angedeutet.

Der erste Manipulator 2 umfasst ein erstes drehbar gelagertes Kupplungsorgan 7, an welches ein Greifwerkzeug 8 angekuppelt werden kann und der zweite Manipulator 4 umfasst ein zweites Kupplungsorgan 9 an welches ein Greifwerkzeug 8 angekuppelt werden kann.

Für das Handling von beispielsweise großen bzw. scheren Blechteilen 6 werden gemäß der Darstellung in Fig. 1 der erste Manipulator 2 und der zweite Manipulator 4 mittels dem Koppelelement 3 miteinander gekoppelt. Das Koppelelement 3 umfasst dazu ein erstes Kupplungselement 10 für den ersten Manipulator 2, ein zweites Kupplungselement 11 für den zweiten Manipulator 4 und eine erste drehbare Lagervorrichtung 12 für ein Greifwerkzeug 8.

Das erste Kupplungselement 10 umfasst ferner eine zweite drehbare Lagervorrichtung 13, wobei die zweite Lagervorrichtung 13 mechanisch mit der ersten Lagervorrichtung 12 gekoppelt ist und eine auf das erste Kupplungselement 10 einwirkende Drehbewegung 14 über die zweite Lagervorrichtung 13 an die erste Lagervorrichtung 12 übertragen werden kann.

Gemäß dem dargestellten Ausführungsbeispiel ist die Manipulatoranordnung 1, bzw. der erste Manipulator 2 und der zweite Manipulator 4 entlang einer Verfahrstrecke 15 verfahrbar ausgeführt. Über die Verfahrstrecke 15 können die Manipulatoranordnung 1, bzw. der erste Manipulator 2 und der zweite Manipulator 4 zu einer nicht näher dargestellten Bearbeitungsvorrichtung 16 verfahren werden, wo Bearbeitungsschritte an dem mittels dem Greifwerkzeug 8 aufgegriffenen Bauteil 5 bzw. Blechteil 6 durchgeführt werden können. An diesem Bauteil 5 bzw. Blechteil 6 können beispielsweise nacheinander Kantungen an einer Längsseite 32 und Kantungen an einer Schmalseite 33 des Bauteils durchgeführt werden.

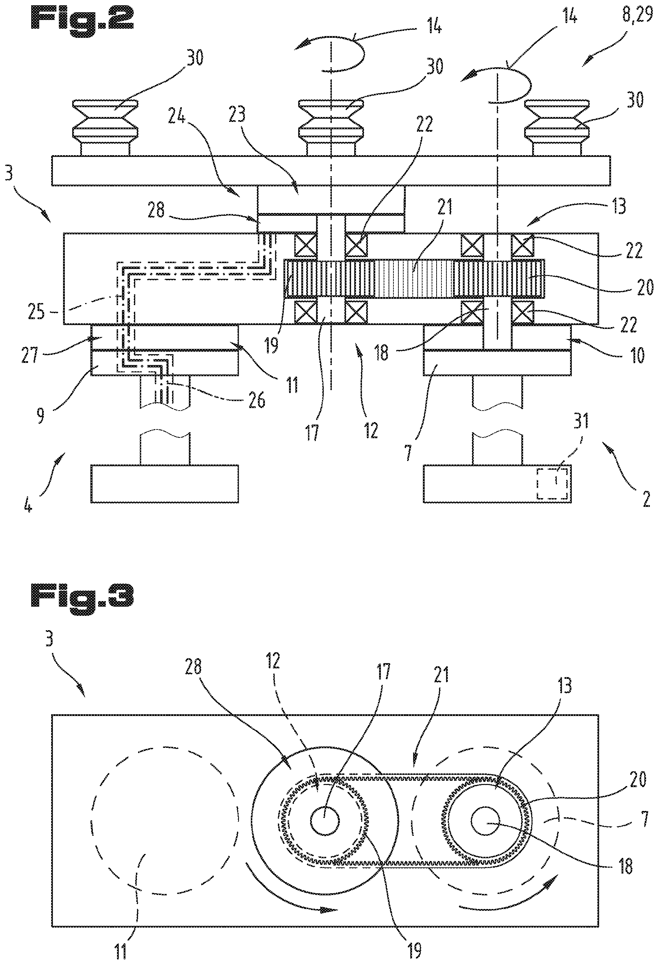

In der Fig. 2 ist eine weitere und gegebenenfalls für sich eigenständige Ausführungsform des Koppelelements 3 gezeigt, wobei wiederum für gleiche Teile gleiche Bezugszeichen bzw. Bauteilbezeichnungen wie in der vorangegangenen Fig. 1 verwendet werden. Um unnötige Wiederholungen zu vermeiden, wird auf die detaillierte Beschreibung in der vorangegangenen Fig. 1 hingewiesen bzw. Bezug genommen.

In der Fig. 2 ist das Koppelelement 3 in einer Seitenansicht dargestellt. Eine erste Lagervorrichtung 12 umfasst eine erste drehbare Welle 17 und eine zweite Lagervorrichtung 13 umfasst eine zweite drehbare Welle 18, wobei die erste Welle 17 und die zweite Welle 18 drehbeweglich miteinander gekoppelt sind. Auf der ersten Welle 17 ist ferner eine erste Zahnriemenscheibe 19 angeordnet und auf der zweiten Welle 18 ist eine zweite Zahnriemenscheibe 20 angeordnet. Die erste Zahnriemenscheibe 19 und die zweite Zahnriemenscheibe 20 sind über einen Zahnriemen 21 miteinander verbunden.

Die erste Lagervorrichtung 12 und die zweite Lagervorrichtung 13 umfassen in dem dargestellten Ausführungsbeispiel zur Lagerung der erste Welle 17 und der zweite Welle 18 mehrere Kugellager 22. Anstelle von Kugellagern 22 können dabei auch andere Lager ausgewählt aus einer Gruppe umfassend Gleitlager und Wälzlager verwendet werden.

Ferner ist in dem dargestellten Ausführungsbeispiel mittels der ersten Lagervorrichtung 12 ein drittes Kupplungsorgan 23 gelagert, mittels welchem ein Greifwerkzeug 8 an das Koppelelement 3 ankoppelbar ist. Das Greifwerkzeug 8 umfasst dazu ein Werkzeug-Kupplungselement 24, mittels welchem das Greifwerkzeug 8 mit dem Koppelelement 3 verbunden, bzw. gekoppelt werden kann.

Zur Übertragung bzw. Weiterleitung eines fluiden Arbeitsmediums 25 bzw. eines elektrischen Signals 26 von dem zweiten Manipulator 4 an das Greifwerkzeug 8 umfasst das zweite Kupplungselement 11 eine Schnittstelle 27 zwischen dem zweiten Manipulator 4 und dem Koppelelement 3. Eine Leitung für ein fluides Arbeitsmedium 25 bzw. ein elektrisches Signal 26 im zweiten Manipulator 4 kann mittels der Schnittstelle 27 mit einer Leitung für ein fluides Arbeitsmedium 25 bzw. ein elektrischen Signal 26 im Koppelelement 3 fluidtechnisch bzw. elektrisch verbunden werden. Über die Leitung für das fluide Arbeitsmedium 25 bzw. das elektrische Signal 26 kann ein fluides Arbeitsmedium bzw. ein elektrischen Signal an das Greifwerkzeug 8 geleitet werden.

Nachdem das Greifwerkzeug 8 drehbar ausgebildet ist, umfasst die erste Lagervorrichtung 12 in dem dargestellten Ausführungsbeispiel einen Drehübertrager 28 mittels welchem das fluide Arbeitsmedium 25 bzw. das elektrische Signal 26 an das Greifwerkzeug 8 übertragen werden kann.

Bei der Bearbeitung von Blechteilen 6 kommen häufig Vakuumgreifer 29 als Greifwerkzeuge 8 zum Einsatz, um Blechteile 6 schonend aufzugreifen, zu halten und transportieren zu können. Um die einzelnen Vakuumsauger 30 des Vakuumgreifers 29 mit Vakuum beaufschlagen zu können, wird Druckluft als Arbeitsmedium 25 verwendet, welches von dem zweiten Manipulator 4 über das Koppelelement 3 an den Vakuumgreifer 29 geführt wird.

Um auf das erste Kupplungselement 10 eine Drehbewegung 14 aufzubringen, welche über die zweite Lagervorrichtung 13 an die erste Lagervorrichtung 12 übertragen wird umfasst der erste Manipulator 2 einen Drehantrieb 31. Hierbei wird das erste Kupplungsorgan 7 mit der Drehbewegung 14 um einen vorbestimmten Drehwinkel beaufschlagt. Bei dem Drehantrieb 31 kann es sich um einen drehzahlregelbaren Drehstrom-Servomotor mit elektromagnetischen Bremsen handeln.

Um nun ein Bauteil 5 bzw. Blechteil 6, welches von dem Greifwerkzeug 8 bzw. Vakuumgreifer 29 aufgenommen ist um einen vorbestimmten Drehwinkel zu drehen, wird mittels dem Drehantrieb 31 das erste Kupplungselement 10, je nach Übersetzungsverhältnis, um einen Drehwinkel verdreht. Die Drehbewegung 14 wird in weiterer Folge über die zweite Lagervorrichtung 13 des ersten Kupplungselements 10 an die erste Lagervorrichtung 12 übertragen, wobei das Bauteil 5 bzw. Blechteil 6 aus einer ersten räumlichen Lage um einen vorbestimmten bzw. definierten Drehwinkel in eine zweite räumliche Lage verdreht wird.

Bei dem Drehwinkel kann es sich beispielsweise um einen 90 Grad Winkel handeln. Wurden Bearbeitungsschritte wie Kantungen an einem rechteckigen Blechteil 6 an einer Längsseite fertig durchgeführt, so kann dieses zum Beispiel um 90 Grad verdreht werden, um Kantungen an einer Schmalseite des rechteckigen Blechteils 6 durchzuführen.

In einem nicht näher dargestellten Ausführungsbeispiel weist die erste Zahnriemenscheibe 19 einen ersten Scheibendurchmesser und die zweite Zahnriemenscheibe 20 einen zweiten Scheibendurchmesser auf, wobei der erste Scheibendurchmesser unterschiedlich zu dem zweiten Scheibendurchmesser ist. Damit können unterschiedliche Übersetzungsverhältnisse realisiert werden.

In einem weitern nicht näher dargestellten Ausführungsbeispiel umfasst das Koppelelement 3 zumindest ein drittes Kupplungselement für zumindest einen dritten Manipulator.

In der Fig. 3 ist eine weitere und gegebenenfalls für sich eigenständige Ausführungsform des Koppelelements 3 gezeigt, wobei wiederum für gleiche Teile gleiche Bezugszeichen bzw. Bauteilbezeichnungen wie in den vorangegangenen Fig. 1 und 2 verwendet werden. Um unnötige Wiederholungen zu vermeiden, wird auf die detaillierte Beschreibung in den vorangegangenen Fig. 1 und 2 hingewiesen bzw. Bezug genommen.

In der Fig. 3 ist das Koppelelement 3 in einer Draufsicht dargestellt. Gemäß dem Ausführungsbeispiel sind eine erste Zahnriemenscheibe 19 und eine zweite Zahnriemenscheibe 20 gleich groß ausgeführt. Zur Übertragung einer Drehbewegung von der zweiten Lagervornchtung 13 mit einer zweiten drehbaren Welle 18 an eine erste Lagervorrichtung 12 mit einer ersten drehbaren Welle 17, sind die erste Zahnriemenscheibe 19 und die zweite Zahnriemenscheibe 20 über einen Zahnriemen 21 miteinander verbunden.

In einer nicht näher dargestellten weiteren Ausführungsform kann anstelle eines Zahnriemens 21 eine Kette vorgesehen sein, mittels welcher die erste Zahnriemenscheibe 19 und die zweite Zahnriemenscheibe 20 miteinander verbunden sind.

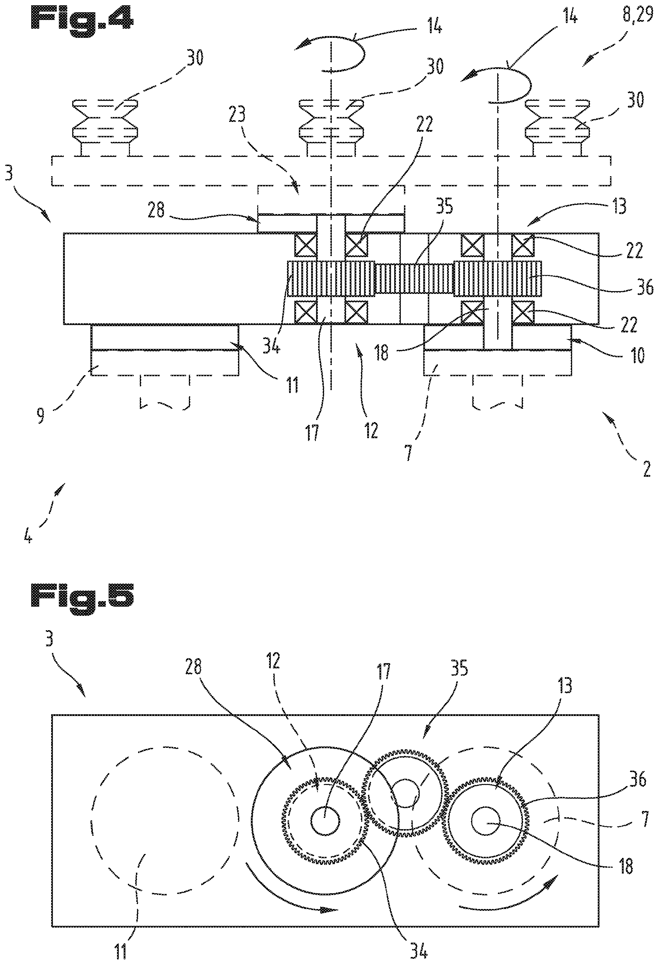

In der Fig. 4 ist eine weitere und gegebenenfalls für sich eigenständige Ausführungsform des Koppelelements 3 gezeigt, wobei wiederum für gleiche Teile gleiche Bezugszeichen bzw. Bauteilbezeichnungen wie in den vorangegangenen Fig. 1 bis 3 verwendet werden. Um unnötige Wiederholungen zu vermeiden, wird auf die detaillierte Beschreibung in den vorangegangenen Fig. 1 bis 3 hingewiesen bzw. Bezug genommen.

Fig. 4 zeigt eine Ausführungsform des Koppelelements 3 in einer Seitenansicht, wobei auf einer ersten drehbeweglichen Welle 17 ein erstes Zahnrad 34 eines Zahnradgetriebes 35 angeordnet ist und auf einer zweiten drehbeweglichen Welle 18 eine zweites Zahnrad 36 des Zahnradgetriebes 35 angeordnet ist. Eine auf die erste Welle 17 einwirkende Drehbewegung 14 ist über das erste Zahnrad 34 an das zweite Zahnrad 36 und die zweite Welle 18 übertragbar.

In einer weiteren Ausführungsform ist dabei auch denkbar, dass das Zahnradgetriebe 35 eine Vielzahl von unterschiedlich dimensionierten Zahnrädern umfasst, je nach gewünschtem Übersetzungsverhältnis.

In der Fig. 5 ist eine weitere und gegebenenfalls für sich eigenständige Ausführungsform des Koppelelements 3 gezeigt, wobei wiederum für gleiche Teile gleiche Bezugszeichen bzw. Bauteilbezeichnungen wie in den vorangegangenen Fig. 1 bis 4 verwendet werden. Um unnötige Wiederholungen zu vermeiden, wird auf die detaillierte Beschreibung in den vorangegangenen Fig. 1 bis 4 hingewiesen bzw. Bezug genommen.

In der Fig. 5 ist das Koppelelement 3 mit einem Zahnradgetriebe 35 in einer Draufsicht dargestellt. Eine auf eine erste Welle 17 einwirkende Drehbewegung 14 ist wiederum über ein erstes Zahnrad 34 an ein zweites Zahnrad 36 und eine zweite Welle 18 übertragbar.

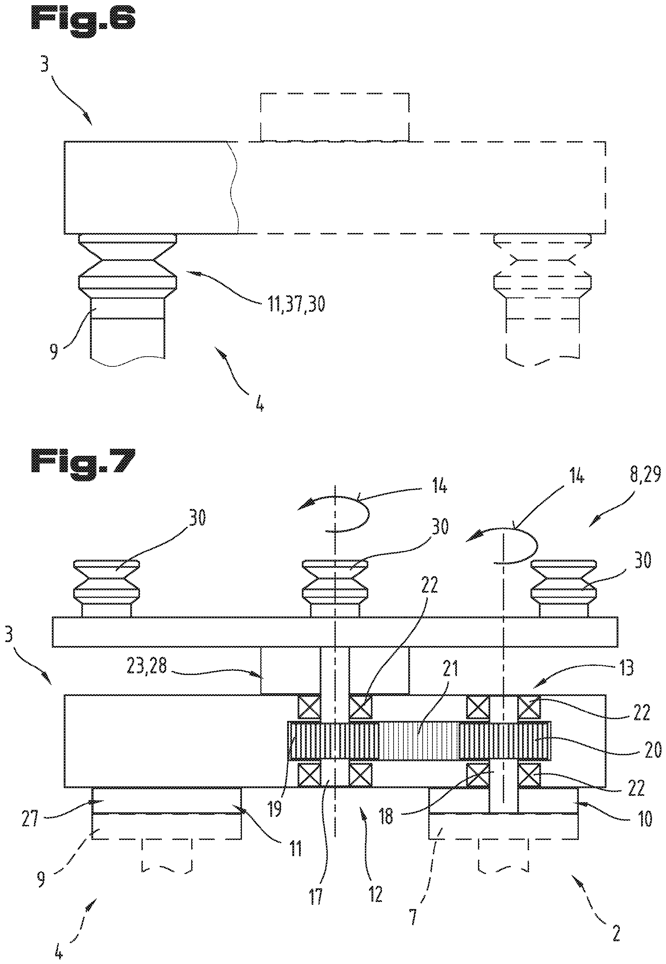

In der Fig. 6 ist eine weitere und gegebenenfalls für sich eigenständige Ausführungsform des Koppelelements 3 gezeigt, wobei wiederum für gleiche Teile gleiche Bezugszeichen bzw. Bauteilbezeichnungen wie in den vorangegangenen Fig. 1 bis 5 verwendet werden. Um unnötige Wiederholungen zu vermeiden, wird auf die detaillierte Beschreibung in den vorangegangenen Fig. 1 bis 5 hingewiesen bzw. Bezug genommen.

Gemäß der schematischen Darstellung in Fig. 6 umfasst das zweite Kupplungselement 11 ein formflexibles, bzw. federelastisches Lagerelement 37, um Ungenauigkeiten eines Manipulators bzw. Fertigungstoleranzen kompensieren zu können. Das Lagerelement 37 kann dabei als ein Vakuumsauger 30 ausgebildet sein.

In der Fig. 7 ist eine weitere und gegebenenfalls für sich eigenständige Ausführungsform des Koppelelements 3 gezeigt, wobei wiederum für gleiche Teile gleiche Bezugszeichen bzw. Bauteilbezeichnungen wie in den vorangegangenen Fig. 1 bis 6 verwendet werden. Um unnötige Wiederholungen zu vermeiden, wird auf die detaillierte Beschreibung in den vorangegangenen Fig. 1 bis 6 hingewiesen bzw. Bezug genommen.

Fig. 7 zeigt dabei eine weitere Ausführungsform des Koppelelements 3, wobei das des Koppelelement 3 eine integrale Einheit mit einem Greifwerkzeug 8 bildet. Ein drittes Kupplungsorgan 23 kann dabei mit einem Drehübertrager 28 eine gemeinsame Baugruppe bilden, wobei das dritte Kupplungsorgan 23 drehbar gelagert ist. Das Greifwerkzeug 8, beispielsweise in Form eines Vakuumgreifers 29 ist dabei fix mit dem Koppelelement 3 gekoppelt um muss somit nicht vor dem Transport bzw. Handling eines Bauteils 5 in einem zusätzlichen Arbeitsschritt angekoppelt werden.

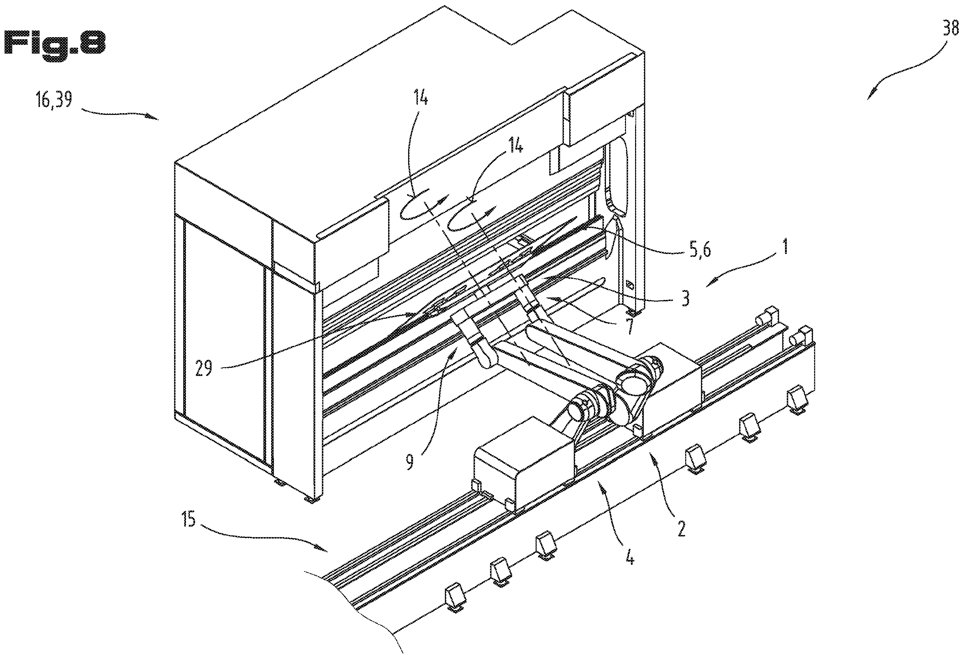

In der Fig. 8 ist eine weitere und gegebenenfalls für sich eigenständige Ausführungsform einer Fertigungsanlage 38 gezeigt, wobei wiederum für gleiche Teile gleiche Bezugszeichen bzw. Bauteilbezeichnungen wie in den vorangegangenen Fig. 1 bis 7 verwendet werden. Um unnötige Wiederholungen zu vermeiden, wird auf die detaillierte Beschreibung in den vorangegangenen Fig. 1 bis 7 hingewiesen bzw. Bezug genommen.

In der Fig. 8 ist die Fertigungsanlage 38 mit einer Biegemaschine 39 und einer Manipulatoranordnung 1 dargestellt.

Zum Biegen eines Bauteils 5, insbesondere eines Blechteils 6 mittels der Biegemaschine 39, wird ein erster Manipulator 2 an einem ersten Kupplungselement 10 eines Koppelelements 3 angekuppelt und ein zweiter Manipulators 4 an einem zweiten Kupplungselement 11 des Koppelelements 3 angekuppelt. Mit der ersten Lagervorrichtung 12 des Koppelelements 3 ist ein Greifwerkzeug 8 in Form eines Vakuumgreifers 29 mit Vakuumsaugern 30 gekoppelt. Vor dem Biegen wird das Blechteil 6 mittels dem Greifwerkzeug 8 aufgegriffen und zu der Biegemaschine 39 transportiert. An der Biegemaschine 39 wird ein erster Biegezyklus mit zumindest einem Biegeschritt an dem Blechteil 6 durchgeführt.

Nach dem ersten Biegezyklus wird mittels des ersten Manipulators 2 eine Drehbewegung 14 auf das erste Kupplungselement 10 aufgebracht, wobei die Drehbewegung 14 über eine zweite Lagervorrichtung 13 des ersten Kupplungselements 10 an eine erste Lagervorrichtung 12 übertragen wird. In weiterer Folge wird die Drehbewegung 14 von der ersten Lagervorrichtung 12 an das Greifwerkzeug 8 und das darauf gehaltene Blechteil 6 übertragen, wobei das Blechteil 6 aus einer ersten räumlichen Lage um einen ersten vorbestimmten Drehwinkel in eine zweite räumliche Lage verdreht wird.

In der zweiten räumlichen Lage kann zumindest ein zweiter Biegezyklus mit zumindest einem Biegeschritt an dem Blechteil 6 durchgeführt werden. Nach dem zweiten Biegezyklus kann das Blechteil 6 aus der zweiten räumlichen Lage um einen zweiten vorbestimmten Drehwinkel in zumindest eine dritte räumliche Lage verdreht werden, woraufhin ein dritter Biegezyklus durchgeführt werden kann, usw.

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist.

Der Schutzbereich ist durch die Ansprüche bestimmt. Die Beschreibung und die Zeichnungen sind zur Auslegung der Ansprüche heranzuziehen.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

### Bezugszeichenaufstellung

| | | | |
|---|---|---|---|
| 1 | Manipulatoranordnung | 31 | Drehantrieb |
| 2 | erster Manipulator | 32 | Längsseite |
| 3 | Koppelelement | 33 | Schmalseite |
| 4 | zweiter Manipulator | 34 | erstes Zahnrad |
| 5 | Bauteil | 35 | Zahnradgetriebe |
| 6 | Blechteil | 36 | zweites Zahnrad |
| 7 | erstes Kupplungsorgan | 37 | formflexibles Lagerelement |
| 8 | Greifwerkzeug | 38 | Fertigungsanlage |
| 9 | zweites Kupplungsorgan | 39 | Biegemaschine |
| 10 | erstes Kupplungselement | | |
| 11 | zweites Kupplungselement | | |
| 12 | erste Lagervorrichtung | | |
| 13 | zweite Lagervorrichtung | | |
| 14 | Drehbewegung | | |
| 15 | Verfahrstrecke | | |
| 16 | Bearbeitungsvorrichtung | | |
| 17 | erste Welle | | |
| 18 | zweite Welle | | |
| 19 | erste Zahnriemenscheibe | | |
| 20 | zweite Zahnriemenscheibe | | |
| 21 | Zahnriemen | | |
| 22 | Kugellager | | |
| 23 | drittes Kupplungsorgan | | |
| 24 | Werkzeug-Kupplungselement | | |
| 25 | Arbeitsmedium | | |
| 26 | elektrisches Signal | | |
| 27 | Schnittstelle | | |
| 28 | Drehübertrager | | |
| 29 | Vakuumgreifer | | |
| 30 | Vakuumsauger | | |

## Patentansprüche

1. Manipulatoranordnung (1) zum Transport und/oder Handling von Bauteilen (5), insbesondere Blechteilen (6), umfassend
einen ersten Manipulator (2) mit einem ersten drehbar gelagerten Kupplungsorgan (7) für ein Greifwerkzeug (8) und einen zweiten Manipulator (4) mit einem zweiten Kupplungsorgan (9) für ein Greifwerkzeug (8);
ein Koppelelement (3) umfassend ein erstes Kupplungselement (10) für den ersten Manipulator (2), ein zweites Kupplungselement (11) für den zweiten Manipulator (4) und eine erste drehbare Lagervorrichtung (12) für ein Greifwerkzeug (8),
**dadurch gekennzeichnet, dass**
das erste Kupplungselement (10) eine zweite drehbare Lagervorrichtung (13) umfasst, wobei die zweite Lagervorrichtung (13) mechanisch mit der ersten Lagervorrichtung (12) gekoppelt ist; und
wobei eine auf das erste Kupplungselement (10) einwirkende Drehbewegung (14) über die zweite Lagervorrichtung (13) an die erste Lagervorrichtung (12) übertragbar ist.

2. Manipulatoranordnung (1) nach Anspruch 1, **dadurch gekennzeichnet, dass** mittels der ersten Lagervorrichtung (12) ein drittes Kupplungsorgan (23) gelagert ist, mittels welchem ein Greifwerkzeug (8) an das Koppelelement (3) ankoppelbar ist.

3. Manipulatoranordnung (1) nach Anspruch 1 oder 2, **dadurch gekennzeichnet, dass** die erste Lagervorrichtung (12) eine erste drehbare Welle (17) umfasst und dass die zweite Lagervorrichtung (13) eine zweite drehbare Welle (18) umfasst, wobei die erste Welle (17) und die zweite Welle (18) drehbeweglich miteinander gekoppelt sind.

4. Manipulatoranordnung (1) nach Anspruch 3, **dadurch gekennzeichnet, dass** auf der ersten Welle (17) eine erste Zahnriemenscheibe (19) angeordnet ist und dass auf der zweiten Welle (18) eine zweite Zahnriemenscheibe (20) angeordnet ist, wobei die erste Zahnriemenscheibe (19) und die zweite Zahnriemenscheibe (20) über einen Zahnriemen (21) miteinander verbunden sind.

5. Manipulatoranordnung (1) nach Anspruch 4, **dadurch gekennzeichnet, dass** die erste Zahnriemenscheibe (19) einen ersten Scheibendurchmesser und die zweite Zahnriemenscheibe (20) einen zweiten Scheibendurchmesser aufweist, wobei der erste Scheibendurchmesser unterschiedlich zu dem zweiten Scheibendurchmesser ist.

6. Manipulatoranordnung (1) nach Anspruch 3, **dadurch gekennzeichnet, dass** auf der ersten Welle (17) ein erstes Zahnrad (34) eines Zahnradgetriebes (35) angeordnet ist und dass auf der zweiten Welle (18) eine zweites Zahnrad (36) des Zahnradgetriebes (35) angeordnet ist, wobei eine auf die zweite Welle (18) einwirkende Drehbewegung (14) über das zweite Zahnrad (36) an das erste Zahnrad (34) und die erste Welle (17) übertragbar ist.

7. Manipulatoranordnung (1) nach einem der vorhergehenden Ansprüche, **dadurch gekennzeichnet, dass** das erste Kupplungselement (10) und/oder das zweite Kupplungselement (11) eine Schnittstelle (27) zur Übertragung von zumindest einem fluiden Arbeitsmedium (25) und/oder eines elektrischen Signals (26) umfasst.

8. Manipulatoranordnung (1) nach Anspruch 7, **dadurch gekennzeichnet, dass** die erste Lagervorrichtung (12) einen Drehübertrager (28) und/oder eine Energieführungskette umfasst, welche dazu ausgebildet sind zumindest ein fluides Arbeitsmedium (25) und/oder ein elektrisches Signal (26) an ein Greifwerkzeug (8) zu übertragen, welches an das Koppelelement (3) ankuppelbar ist.

9. Manipulatoranordnung (1) nach einem der vorhergehenden Ansprüche, **dadurch gekennzeichnet, dass** das zweite Kupplungselement (11) ein formflexibles Lagerelement (37) umfasst.

10. Manipulatoranordnung (1) nach einem der vorhergehenden Ansprüche, **dadurch gekennzeichnet, dass** das Koppelelement (3) zumindest ein drittes Kupplungselement für zumindest einen dritten Manipulator umfasst.

11. Manipulatoranordnung (1) nach einem der vorhergehenden Ansprüche, **dadurch gekennzeichnet, dass** zumindest der erste Manipulator (2) und/oder der zweite Manipulator (4) einen Drehantrieb (31) umfassen, welcher dazu ausgebildet ist, das erste Kupplungsorgan (7) und/oder zweite Kupplungsorgan (9) in eine Drehbewegung (14) zu versetzen.

12. Verfahren zum Biegen eines Bauteils (5), insbesondere eines Blechteils 6, umfassend
- Bereitstellen einer Biegemaschine (39);
- Bereitstellen einer Manipulatoranordnung (1) nach einem der Ansprüche 1 bis 11;
- Ankuppeln des ersten Manipulators (2) an dem ersten Kupplungselement (10) des Koppelelements (3) und Ankuppeln des zweiten Manipulators (4) an dem zweiten Kupplungselement (11) des Koppelelements (3), wobei mit der erste Lagervorrichtung (12) des Koppelelements (3) das Greifwerkzeug (8) gekoppelt ist;
- Aufgreifen des Bauteils (5) mittels dem Greifwerkzeug (8);
- Transport des Bauteils (5) zu der Biegemaschine (39);
- Durchführen von einem ersten Biegezyklus mit zumindest einem Biegeschritt an dem Bauteil (5),
**dadurch gekennzeichnet, dass**
nach dem ersten Biegezyklus mittels des ersten Manipulators (2) eine Drehbewegung (14) auf das erste Kupplungselement (10) aufgebracht wird;
wobei die Drehbewegung (14) über die zweite Lagervorrichtung (13) des ersten Kupplungselements (10) an die erste Lagervorrichtung (12) übertragen wird; wobei die Drehbewegung (14) von der ersten Lagervorrichtung (12) an das Greifwerkzeug (8) und das darauf gehaltene Bauteil (5) übertragen wird; und
wobei das Bauteil (5) aus einer ersten räumlichen Lage um einen ersten vorbestimmten Drehwinkel in eine zweite räumliche Lage verdreht wird.

13. Verfahren nach Anspruch 12, **dadurch gekennzeichnet, dass** an dem Bauteil (5) in der zweiten räumlichen Lage zumindest ein zweiter Biegezyklus mit zumindest einem Biegeschritt durchgeführt wird.

14. Verfahren nach Anspruch 13, **dadurch gekennzeichnet, dass** das Bauteil (5) aus der zweiten räumlichen Lage um einen zweiten vorbestimmten Drehwinkel in zumindest eine dritte räumliche Lage verdreht wird.

## Claims

1. A manipulator arrangement (1) for transporting and/or handling components (5), in particular sheet metal parts (6), comprising
a first manipulator (2) with a first rotatably mounted coupling member (7) for a gripping tool (8) and a second manipulator (4) with a second coupling member (9) for a gripping tool (8);
a coupler element (3) comprising a first coupling element (10) for the first manipulator (2), a second coupling element (11) for the second manipulator (4) and a first rotatable bearing device (12) for a gripping tool (8),
**characterized in that**
the first coupling element (10) comprises a second rotatable bearing device (13), wherein the second bearing device (13) is mechanically coupled to the first bearing device (12); and
wherein a rotational movement (14) acting on the first coupling element (10) can be transmitted to the first bearing device (12) via the second bearing device (13).

2. The manipulator arrangement (1) according to claim 1, **characterized in that** a third coupling member (23), by means of which a gripping tool (8) can be coupled to the coupler element (3), is mounted by means of the first bearing device (12).

3. The manipulator arrangement (1) according to claim 1 or 2, **characterized in that** the first bearing device (12) comprises a first rotatable shaft (17) and that the second bearing device (13) comprises a second rotatable shaft (18), wherein the first shaft (17) and the second shaft (18) are coupled to each other in a rotatable manner.

4. The manipulator arrangement (1) according to claim 3, **characterized in that** a first toothed belt pulley (19) is arranged on the first shaft (17) and that a second toothed belt pulley (20) is arranged on the second shaft (18), wherein the first toothed belt pulley (19) and the second toothed belt pulley (20) are connected to each other via a toothed belt (21).

5. The manipulator arrangement (1) according to claim 4, **characterized in that** the first toothed belt pulley (19) has a first pulley diameter and the second toothed belt pulley (20) has a second pulley diameter, wherein the first pulley diameter is different from the second pulley diameter.

6. The manipulator arrangement (1) according to claim 3, **characterized in that** a first gear (34) of a gear drive (35) is arranged on the first shaft (17), and that a second gear (36) of the gear drive (35) is arranged on the second shaft (18), wherein a rotational movement (14) acting on the second shaft (18) can be transmitted to the first gear (34) and the first shaft (17) via the second gear (36).

7. The manipulator arrangement (1) according to one of the preceding claims, **characterized in that** the first coupling element (10) and/or the second coupling element (11) comprises an interface (27) for transmitting at least one fluid working medium (25) and/or an electrical signal (26).

8. The manipulator arrangement (1) according to claim 7, **characterized in that** the first bearing device (12) comprises a rotary transducer (28) and/or an energy guiding chain, which are configured to transmit at least one fluid working medium (25) and/or an electrical signal (26) to a gripping tool (8) which can be coupled to the coupler element (3).

9. The manipulator arrangement (1) according to one of the preceding claims, **characterized in that** the second coupling element (11) comprises a form-flexible bearing element (37).

10. The manipulator arrangement (1) according to one of the preceding claims, **characterized in that** the coupler element (3) comprises at least a third coupling element for at least a third manipulator.

11. The manipulator arrangement (1) according to one of the preceding claims, **characterized in that** at least the first manipulator (2) and/or the second manipulator (4) comprise a rotary drive (31) which is configured to set the first coupling member (7) and/or second coupling member (9) in a rotational movement (14).

12. A method for bending a component (5), in particular a sheet metal part 6, comprising
- providing a bending machine (39);
- providing a manipulator arrangement (1) according to one of claims 1 to 11;
- coupling the first manipulator (2) to the first coupling element (10) of the coupler element (3) and coupling the second manipulator (4) to the second coupling element (11) of the coupler element (3), wherein the gripping tool (8) is coupled to the first bearing device (12) of the coupling element (3);
- gripping the component (5) by means of the gripping tool (8);
- transporting the component (5) to the bending machine (39);
- performing a first bending cycle with at least one bending step on the component (5),
**characterized in that**
after the first bending cycle, a rotational movement (14) is applied to the first coupling element (10) by means of the first manipulator (2);
wherein the rotational movement (14) is transmitted to the first bearing device (12) via the second bearing device (13) of the first coupling element (10);
wherein the rotational motion (14) is transmitted from the first bearing device (12) to the gripping tool (8) and the component (5) held thereon; and
wherein the component (5) is rotated from a first spatial position to a second spatial position by a first predetermined angle of rotation.

13. The method according to claim 12, **characterized in that** at least a second bending cycle with at least one bending step is performed on the component (5) in the second spatial position.

14. The method according to claim 13, **characterized in that** the component (5) is rotated from the second spatial position into at least a third spatial position by a second predetermined angle of rotation.

## Revendications

1. Dispositif de manipulation (1) pour le transport et/ou la manipulation de pièces (5), plus particulièrement de pièces en tôle (6), comprenant
un premier manipulateur (2) avec un premier organe de couplage logé de manière rotative (7) pour un outil de préhension (8) et un deuxième manipulateur (4) avec un deuxième organe de couplage (9) pour un outil de préhension (8) ;
un élément d'accouplement (3) comprenant un premier élément de couplage (10) pour le manipulateur (2), un deuxième élément de couplage (11) pour le deuxième manipulateur (4) et un premier dispositif de palier rotatif (12) pour un outil de préhension (8),
**caractérisé en ce que**
le premier élément de couplage (10) comprend un deuxième dispositif de palier rotatif (13), dans lequel le deuxième dispositif de palier (13) est couplé mécaniquement avec le premier dispositif de palier (12) ; et
dans lequel un mouvement de rotation (14) agissant sur le premier élément de couplage (10) peut être transmis par l'intermédiaire du deuxième dispositif de palier (13) au premier dispositif de palier (12).

2. Dispositif de manipulation (1) selon la revendication 1, **caractérisé en ce que**, au moyen du premier dispositif de palier (12), un troisième organe de couplage (23) est logé, au moyen duquel un outil de préhension (8) peut être couplé à l'élément d'accouplement (3).

3. Dispositif de manipulation (1) selon la revendication 1 ou 2, **caractérisé en ce que** le premier dispositif de palier (12) comprend un arbre rotatif (17) et **en ce que** le deuxième dispositif de palier (13) comprend un deuxième arbre rotatif (18), dans lequel le premier arbre (17) et le deuxième arbre (18) sont couplés de manière rotative entre eux.

4. Dispositif de manipulation (1) selon la revendication 3, **caractérisé en ce que**, sur le premier arbre (17), est disposé un premier disque de courroie dentée (19) et **en ce que**, sur le deuxième arbre (18), est disposé un deuxième disque de courroie dentée (20), dans lequel le premier disque de courroie dentée (19) et le deuxième disque de courroie dentée (20) sont reliés entre eux par l'intermédiaire d'une courroie dentée (21).

5. Dispositif de manipulation (1) selon la revendication 4, **caractérisé en ce que**, sur le premier disque de courroie dentée (19) présente un premier diamètre de disque et le deuxième disque de courroie dentée (20) présente un deuxième diamètre de disque, dans lequel le premier diamètre de disque est différent du deuxième diamètre de disque.

6. Dispositif de manipulation (1) selon la revendication 3, **caractérisé en ce que**, sur le premier arbre (17), est disposée une première roue dentée (34) d'un engrenage à roues dentées (35) et **en ce que**, sur le deuxième arbre (18), est disposé une deuxième roue dentée (36) de l'engrenage à roues dentées (35), dans lequel un mouvement de rotation (14) agissant sur le deuxième arbre (18) peut être transmis, par l'intermédiaire de la deuxième roue dentée (36), à la première roue dentée (34) et au premier arbre (17).

7. Dispositif de manipulation (1) selon l'une des revendications précédentes, **caractérisé en ce que** le premier élément de couplage (10) et/ou le deuxième élément de couplage (11) comprend une interface (27) pour la transmission d'au moins un milieu de travail fluide (25) et/ou d'un signal électrique (26).

8. Dispositif de manipulation (1) selon la revendication 7, **caractérisé en ce que** le premier dispositif de palier (12) comprend un transmetteur de rotation (28) et/ou une chaîne de transport d'énergie, qui sont conçus pour transmettre au moins un milieu de travail fluide (25) et/ou un signal électrique (26) à un outil de préhension (8), qui peut être couplé à l'élément de couplage (3).

9. Dispositif de manipulation (1) selon l'une des revendications précédentes, **caractérisé en ce que** le deuxième élément de couplage (11) comprend un élément de palier flexible (37).

10. Dispositif de manipulation (1) selon l'une des revendications précédentes, **caractérisé en ce que** l'élément d'accouplement (3) comprend au moins un troisième élément de couplage pour au moins un troisième manipulateur.

11. Dispositif de manipulation (1) selon l'une des revendications précédentes, **caractérisé en ce qu'**au moins le premier manipulateur (2) et/ou le deuxième manipulateur (4) comprennent un entraînement rotatif (31) qui est conçu pour appliquer un mouvement de rotation (14) au premier organe de couplage (7) et/ou au deuxième organe de couplage (9).

12. Procédé de pliage d'une pièce (5), plus particulièrement d'une pièce en tôle 6, comprenant
- la mise à disposition d'une machine de pliage (39) ;
- la mise à disposition d'un dispositif de manipulation selon l'une des revendications 1 à 11 ;
- le couplage du premier manipulateur (2) au premier élément de couplage (10) de l'élément d'accouplement (3) et couplage du deuxième manipulateur (4) au deuxième élément de couplage (11) de l'élément d'accouplement (3), dans lequel, avec le premier dispositif de palier (12) de l'élément d'accouplement (3), l'outil de préhension (8) est couplé ;
- préhension de la pièce (5) au moyen de l'outil de préhension (8) ;
- transport de la pièce (5) vers la machine de pliage (39) ;
- réalisation d'un premier cycle de pliage avec au moins une étape de pliage sur la pièce (5),
**caractérisé en ce que**
après le premier cycle de pliage, au moyen du premier manipulateur (2), est un mouvement de rotation (14) est appliqué au premier élément de couplage (10) ;
dans lequel le mouvement de rotation (14) est transmis par l'intermédiaire du deuxième dispositif de palier (13) du premier élément de couplage (10) au premier dispositif de palier (12) ;
dans lequel le mouvement de rotation (14) est transmis du premier dispositif de palier (12) à l'outil de préhension (8) et à la pièce (5) qui est maintenue sur celui-ci ; et dans lequel la pièce (5) est tournée, à partir d'une première position spatiale, d'un premier angle de rotation prédéterminé, vers une deuxième position spatiale.

13. Procédé selon la revendication 12, **caractérisé en ce que**, sur la pièce (5) dans la deuxième position spatiale, est réalisé au moins un deuxième cycle de pliage avec au moins une étape de pliage.

14. Procédé selon la revendication 13, **caractérisé en ce que** la pièce (5) est tournée, à partir d'une deuxième position spatiale, d'un deuxième angle de rotation prédéterminé, vers une troisième position spatiale.
